# EUROPÄISCHE PATENTSCHRIFT

(11) **EP 3 504 461 B1**
(45) Veröffentlichungstag und Bekanntmachung des Hinweises auf die Patenterteilung: **17.09.2025**
(21) Anmeldenummer: 17731104.0
(22) Anmeldetag: 12.06.2017
(51) Int. Cl.: F16F 13/14

(54) **BUCHSE**
BUSHING
BLOC DE SUSPENSION

(30) Priorität: 23.08.2016 DE 102016215735
(43) Veröffentlichungstag der Anmeldung: 03.07.2019
(73) Patentinhaber: ContiTech Vibration Control GmbH, 30175 Hannover (DE)
(72) Erfinder: KLETTKE, Michael, 30171 Hannover (DE)
(74) Vertreter: Preusser, Andrea
(86) Internationale Anmeldenummer: PCT/EP2017/064230
(87) Internationale Veröffentlichungsnummer: WO 2018/036678

(56) Entgegenhaltungen:
- EP-A2- 0 199 240
- DE-A1- 102006 045 051
- DE-T5- 112013 005 260
- FR-A1- 2 819 301
- FR-A1- 2 830 911
- GB-A- 2 381 846

## Beschreibung

Die Erfindung betrifft eine Buchse nach dem Oberbegriff des Anspruchs 1, ein Fahrwerk und bzw. oder ein Aggregat mit einer derartigen Buchse nach dem Anspruch 11 sowie ein Fahrzeug mit einem derartigen Fahrwerk und bzw. oder mit einem derartigen Aggregat nach dem Anspruch 12.

Auf dem Gebiet der schwingungsdämpfenden Vorrichtungen sind u.a. die Elastomerbuchsen bekannt, welche u. a. als Fahrwerkslager eingesetzt werden können. Diese werden üblicherweise entweder als konventionelle Gummi-Metall-Buchsen oder als hydraulische Buchsen, auch Hydrobuchsen genannt, ausgeführt. In jedem Fall wird ein Innenteil der Buchse über eine elastische Tragfeder bzw. ein in Längsrichtung zueinander beabstandetes Paar von elastischen Tragfedern in radialer Richtung mit einem Außenteil verbunden, so dass sowohl radiale Bewegungen als auch Bewegungen in Längsrichtung sowie Torsionen elastisch dämpfend aufgenommen werden können.

Derartige Buchsen und insbesondere Hydrobuchsen können mit Anschlägen ausgerüstet sein, um die maximalen Wege der Einfederung in radialer Richtung, d.h. den Federweg, einzuschränken. Hierbei wird zwischen internen und externen Anschlägen unterschieden, wobei die internen Anschläge in Längsrichtung zwischen den Tragfedern bzw. innerhalb der Fluidkammern angeordnet sind und die externen Anschläge außerhalb.

Die Anschläge bestehen üblicherweise aus einem Festigkeitsträger, welcher mit dem Innenteil oder mit dem Außenteil feststehend verbunden ist, und einer Gummischicht, welche den Festigkeitsträger gegenüber der Umgebung wie z.B. der Fluidkammer abdeckt.

Der Anschlag bzw. dessen Gummischicht kann in radialer Richtung mit dem gegenüberliegenden Innenteil bzw. Außenteil in Kontakt kommen und hierdurch die maximale radiale Einfederung begrenzen.

Nachteilig ist hierbei, dass im Fall der maximalen radialen Einfederung z.B. durch Bremsen gleichzeitig auch hohe Torsionskräfte durch die Einfederung der Räder auftreten können. Aufgrund der hierdurch bewirkten Torsionsbeanspruchungen mit gleichzeitiger hoher Radialbeanspruchung kann der Anschlag bzw. dessen Gummischicht am gegenüberliegenden Innenteil bzw. Außenteil abgerieben oder sogar abgeschert werden. Dies kann zu einem Verschleiß überhaupt bzw. zu einem beschleunigten Verschleiß und sogar zu einer Zerstörung des Anschlags führen.

Nachteilig ist ferner bei externen Anschlägen allgemein, dass diese relativ viel Platz benötigen, was zu Lasten der Größe der Arbeitskammer, insbesondere in Längsrichtung, gehen kann. Dies kann zu einer schlechteren Performance in Hinblick auf die Dämpfungseigenschaften führen.

Nachteilig ist bei internen Anschlägen allgemein, dass der zur Verfügung stehende Bauraum in Längsrichtung zwischen den elastischen Tragfedern in der Regel beschränkt ist. Hieraus kann eine sehr hohe Flächenpressung für die Gummibeschichtung des Anschlags resultieren.

Weiterhin sind interne Anschläge in der Regel derart ausgebildet, dass sie am Innenteil angebunden sind, welches üblicherweise aus Metall besteht. Das Innenmetallteil kann zur Verbesserung der Anbindung Erhebungen aufweisen, die entweder eine Herstellung als Druckgussteil oder als Röhrchen mit angespritzter Anschlagkontur erfordern. Nachteilig bei der Herstellung als Druckgussteil kann sein, dass hierdurch das Gewicht des Innenteils erhöht werden kann, was sich nachteilig auf die Dämpfungseigenschaften der Buchse auswirken kann. Nachteilig bei der Herstellung als Röhrchen mit angespritzter Anschlagkontur kann sein, dass dies die Herstellung aufwendiger gestalten kann.

Falls das Innenteil zur Aufnahme hoher Torsionskräfte in Stahl ausgeführt wird, kann dies dazu führen, dass die Kontur des Anschlags separat ausgebildet und dann fest mit dem Anschlag verbunden wird, um das Gewicht und bzw. oder die Kosten zu verringern. Dies kann jedoch einen aufwendigen Prozess zum Anspritzen einer Kunststoff oder Druckgusskontur erfordern sowie ferner den Korrosionsschutz schädigen.

Die GB 2 381 846 A beschreibt eine hydraulisch gedämpfte Montagevorrichtung mit ersten und zweiten Ankerteilen, wobei die Ankerteile jeweils ein Rohr und eine Hülse sind und durch elastische Wände verbunden sind, die axial beabstandet sind, um einen Raum innerhalb der Hülse zu definieren. Der Raum ist durch zwei Axialwände in zwei Kammern für Hydraulikflüssigkeit unterteilt. Ein Durchgang sorgt für eine fließende Verbindung zwischen den beiden Kammern. Die Hülse definiert teilweise den Außenumfang des Durchgangs, wobei der Durchgang durch einen Befestigungsring verschlossen ist, an dem die elastische Wand befestigt ist. Somit wird der Befestigungsring an zwei beabstandeten Stellen an der Hülse mit der Hülse verbunden, deren radial innerer Teil axial nach innen vom Umfang des Durchgangs, der axial am weitesten von der Mitte der Halterung entfernt ist, verläuft.

Die FR 2 819 301 A1 beschreibt ein Verbindungelement, umfassend einen inneren Körper, der dazu bestimmt ist, an einer aufgehängten Komponente befestigt zu werden, einen koaxialen Außenrahmen, der an einem Chassis befestigt ist, und einen geformten Elastomerblock in dem Raum zwischen ihnen, der zwei fluidgefüllte Kammern bildet. Der Innenkörper und der Außenrahmen sind zu einem Kanal geformt, der die Kammern verbindet, z.B. in Form eines Umfangskanals im Innenkörper. Der Außenrahmen ist in Form eines Rohrelements mit nach dem Befüllen umgebogenen Enden zum Crimpen an den Innenkörper ausgeführt.

Die DE 11 2013 005 260 T5 beschreibt eine Schwingungsdämpfungsvorrichtung mit einem Innenzylinder, einem Außenzylinder, der auf der Außendurchmesserseite des Innenzylinders im Abstand angeordnet ist, einem gummielastischen Körper, der zwischen dem Innenzylinder und dem Außenzylinder angeordnet ist, um den Innenzylinder und den Außenzylinder elastisch zu verbinden, und einer in den gummielastischen Körper eingebetteten Zwischenplatte vor. In der Zwischenplatte sind eine Vielzahl von Ausschnittteilen ausgebildet, die auf beiden Stirnseiten in axialer Richtung des äußeren Zylinders zum Verbinden eines gummielastischen Innenseitenkörpers und eines gummielastischen Außenseitenkörpers angeordnet sind. Mindestens eines der Ausschnittteile ist so angeordnet, dass es sich auf einem Bereich überlappt, der zwischen zwei parallelen imaginären Ebenen liegt, die an die äußere Umfangsfläche des Innenzylinders angrenzen.

Die EP 0 199 240 A2 beschreibt ein vorspannbares und hydraulisch gedämpftes Lagerelement mit einer äußeren Lagerhülse und einem, von einem Elastomerkörper im Innern gehaltenen Innenteil, wobei der Elastomerkörper oberhalb und unterhalb des Innenteils Kammern als mechanischen Federungsraum aufweist, die mit einer hydraulischen Flüssigkeit gefüllt sind und über einen Kanal miteinander in Verbindung stehen. Zur amplitudenabhängigen Dämpfung auftretender Schwingungen ist erfindungsgemäß vorgesehen, daß das Lagerelement stirnseitige Kappen aus elastisch verformbarem, elastomerem Material aufweist, die zwischen sich und dem vom Innenteil angenähert radial nach beiden Seiten verlaufenden Elastomerköper mindestens auf einer Stirnseite den veränderlichen Querschnitt aufweisenden Kanal bilden.

Eine Aufgabe der vorliegenden Erfindung ist es, eine Buchse der eingangs beschriebenen Art mit verbesserter Lebensdauer des Anschlags bereit zu stellen. Insbesondere soll der Abrieb des Anschlags verringert werden. Dies soll insbesondere möglichst einfach und bzw. oder kostengünstig erreicht werden. Insbesondere soll eine große Anschlagsfläche ermöglicht werden. Insbesondere soll eine derartige Buchse mit zusätzlichen Möglichkeiten zur Abstimmung der Anschlagskennlinie und bzw. oder mit zusätzlicher kardanischer Flexibilität des Anschlages geschaffen werden. Zumindest soll eine Alternative zu bekannten Buchsen bereitgestellt werden.

Die Aufgabe wird erfindungsgemäß durch eine Buchse mit den Merkmalen gemäß Anspruch 1, durch ein Fahrwerk und bzw. oder durch ein Aggregat mit den Merkmalen gemäß Anspruch 11 sowie durch ein Fahrzeug mit den Merkmalen gemäß Anspruch 12 gelöst. Vorteilhafte Weiterbildungen sind in den Unteransprüchen beschrieben.

Die vorliegende Erfindung betrifft somit eine Buchse gemäß dem Oberbegriff des Anspruchs 1. Derartige Buchsen sind aus dem Stand der Technik bekannt und weisen die zuvor beschriebenen Nachteile auf.

Um diese Nachteile zu überwinden ist erfindungsgemäß das Anschlagelement mit dem Innenteil oder mit dem Außenteil derart elastisch verbunden, dass das Anschlagelement gegenüber dem Innenteil bzw. gegenüber dem Außenteil elastisch tordiert werden kann.

Dabei ist das Maß dieser möglichen Torsion derart ausgelegt, dass bei einem Kontakt des

Anschlagelements mit dem Innenteil bzw. dem Außenteil die relative Torsion zwischen Innenteil und Außenteil durch die elastische Verbindung des Anschlagelements wenigstens weitestgehend, vorzugsweise möglichst vollständig, aufgenommen werden kann.

Mit anderen Worten kann das Anschlagelement das Innenteil bzw. das Außenteil kontaktieren und im Falle einer dann stattfindenden Torsion zwischen Innenteil und Außenteil diese Torsionskräfte mittels seiner elastischen Verbindung weitestgehend bis vollständig aufnehmen, so dass nur eine geringe bis möglichst gar keine Relativbewegung zwischen dem Anschlagelement und dem kontaktierten Innenteil bzw. dem kontaktierten Außenteil an der Kontaktstelle zustande kommt. Hierdurch kann die Torsionsbelastung für das Anschlagelement verringert bis vollständig vermieden werden, so dass die Lebensdauer des Anschlagelements verlängert werden kann.

Vorteilhaft ist dabei auch, dass die elastische Verbindung zwischen Anschlagelement und Innenteil bzw. Außenteil auch kardanische Beanspruchungen aufnehmen kann, da sich das Anschlagelement auch diesen Bewegungen bzw. Belastungen besser anpassen kann. Auch dies kann die Lebensdauer des Anschlagelements erhöhen.

Gemäß einem Aspekt der vorliegenden Erfindung ist das Anschlagelement mit dem Innenteil oder mit dem Außenteil über eine elastische Verbindungsschicht zumindest abschnittsweise, vorzugsweise vollflächig, verbunden. Die Dicke der Verbindungsschicht, d.h. die radiale Erstreckung der Verbindungsschicht, ist dabei derart zu dimensionieren, dass die zuvor beschriebene vorteilhafte Wirkung der Torsionsaufnahme durch die Verbindungsschicht erreicht werden kann. Die Verbindungsschicht kann hierzu abschnittsweise zwischen dem Anschlagelement und dem Innenteil bzw. dem Außenteil vorgesehen sein, sofern dies ausreichend ist, um die gewünschte Wirkung zu erzielen.

Vorzugsweise ist die Verbindungsschicht vollflächig zwischen dem Anschlagelement und dem Innenteil bzw. dem Außenteil vorzusehen, um die aufzunehmenden Torsionskräfte möglichst gleichmäßig über die Verbindungsschicht zu verteilen. Dies kann die Lebensdauer der Verbindungsschicht erhöhen.

Vorteilhaft ist hierbei auch, dass die Verbindungsschicht eine akustische Entkopplung bewirken kann. Hierdurch kann ein Durchdringen oder Weiterleiten eines akustischen Signals in die Fahrzeugstruktur verhindert oder zumindest gemindert werden.

Gemäß der vorliegenden Erfindung weist das Anschlagelement zumindest abschnittsweise, vorzugsweise vollflächig, eine elastische Außenschicht auf, welche radial in Richtung des Federweges ausgerichtet ist. Hierdurch kann eine elastische Dämpfung und damit auch eine elastische Aufnahme von Torsionskräften zusätzlich auch auf der Seite des Anschlagelements erfolgen, welche radial dem Kontakt mit dem Innenteil bzw. dem Außenteil zugewandt ist. Dies kann die Belastung der Torsion auf beide elastische Schichten verteilen und die elastische Verbindung zwischen Anschlagelement und Innenteil bzw. Außenteil verringern, so dass die elastische Verbindung länger halten kann.

Gemäß der vorliegenden Erfindung weist die elastische Außenschicht eine Strukturierung, vorzugsweise in Form von radialen Vorsprüngen, auf, welche ausgebildet ist, sich bei Kontakt elastisch zu verformen. Hierdurch kann die Aufnahme von Kontakt- und insbesondere von Torsionskräften verbessert werden. Gemäß einem weiteren Aspekt der vorliegenden Erfindung wird das Anschlagelement im Wesentlichen in Richtung des Federweges aus zwei sich diametral gegenüberliegenden Anschlagsbereichen gebildet. Auf diese Weise kann die Wirkung des Anschlagelements in dieser Raumrichtung verstärkt angewendet werden.

Gemäß einem weiteren Aspekt der vorliegenden Erfindung ist das Anschlagelement im Wesentlichen senkrecht zur Richtung des Federweges schmaler ausgebildet. Hierdurch kann eine Wirkung des Anschlagelements in dieser Raumrichtung vermieden werden. Ferner kann hierdurch ein Raum innerhalb der Buchse geschaffen werden, um z.B. die fluidgefüllten Kammern einer Hydrobuchse anzuordnen.

Gemäß einem weiteren Aspekt der vorliegenden Erfindung bestehen das Innenteil und das Anschlagelement aus verschiedenen Materialien. Auf diese Weise kann das Dämpfungsverhalten der Buchse beeinflusst werden. Insbesondere können das Innenteil und das Anschlagelement durch die jeweiligen Materialien unterschiedlich ausgelegt und optimiert werden. Auch können hierdurch ggfs. Materialkosten und bzw. oder Herstellungskosten reduziert werden. Das Artikelgewicht kann durch diese Flexibilität in der Materialauswahl und in der Gestaltung der Komponenten Innenteil und Anschlagelement ebenfalls positiv beeinflusst werden.

Gemäß einem weiteren Aspekt der vorliegenden Erfindung bestehen das Innenteil aus Stahl oder aus Aluminium und das Anschlagelement aus Kunststoff. Hierdurch kann das Innenteil hohe Belastungen aufnehmen und das Anschlagelement vergleichsweise leicht ausgebildet werden.

Gemäß einem weiteren Aspekt der vorliegenden Erfindung weist das Anschlagelement wenigstens einen Durchgang, vorzugsweise eine Mehrzahl von Durchgängen, auf, welche(r) sich vorzugsweise im Wesentlichen, besonders bevorzugt vollständig, in Längsrichtung erstreckt. Auf diese Weise kann das Gewicht des Anschlagelements reduziert werden, ohne dessen Stabilität wesentlich zu verringern. Ferner kann eine bessere Verbindung zwischen dem Anschlagelement und dessen elastischer Verbindung hergestellt werden, indem das elastische Verbindungsmaterial den Durchgang durchdringen kann. Wird der Durchgang geradlinig in Längsrichtung ausgeführt, so kann dies die Herstellung z.B. als Spritzgussteil oder auch mittels Bohrung vereinfachen.

Gemäß einem weiteren Aspekt der vorliegenden Erfindung sind wenigstens ein Durchgang in einem ersten Anschlagbereich und wenigstens ein Durchgang in einem zweiten Anschlagbereich angeordnet. Auf diese Weise kann eine möglichst gleichmäßige Verbindung zwischen dem Anschlagelement und dessen elastischer Verbindung hergestellt werden.

Gemäß einem weiteren Aspekt der vorliegenden Erfindung sind zwischen dem Innenteil und dem Außenteil wenigstens eine erste Kammer und eine zweite Kammer ausgebildet, wobei die beiden Kammern medienführend miteinander verbunden sind. Hierdurch kann eine zusätzliche Dämpfung der Buchse erreicht werden.

Gemäß einem weiteren Aspekt der vorliegenden Erfindung sind die beiden Kammern mit einem Fluid gefüllt. Hierdurch kann die vorliegende Erfindung auf eine Hydrobuchse angewendet werden.

Die vorliegende Erfindung betrifft auch ein Fahrwerk oder ein Aggregat mit wenigstens einer Buchse wie zuvor beschrieben. Auf diese Weise können die zuvor beschriebenen Eigenschaften und Vorteile einer erfindungsgemäßen Buchse auf ein Fahrwerk und bzw. oder auf ein Aggregat angewendet werden.

Die vorliegende Erfindung betrifft auch ein Fahrzeug mit einem Fahrwerk und bzw. oder mit einem Aggregat wie zuvor beschrieben. Auf diese Weise können die zuvor beschriebenen Eigenschaften und Vorteile eines erfindungsgemäßen Fahrwerks und bzw. oder eines erfindungsgemäßen Aggregats auf ein Fahrzeug angewendet werden.

Ein Ausführungsbeispiel und weitere Vorteile der Erfindung werden nachstehend im Zusammenhang mit den folgenden Figuren erläutert. Darin zeigt:
- Fig. 1: eine schematische Darstellung eines Längsschnitts durch eine erfindungsgemäße Buchse von der Seite; und
- Fig. 2: eine schematische Darstellung eines Querschnitts A durch eine erfindungsgemäße Buchse.

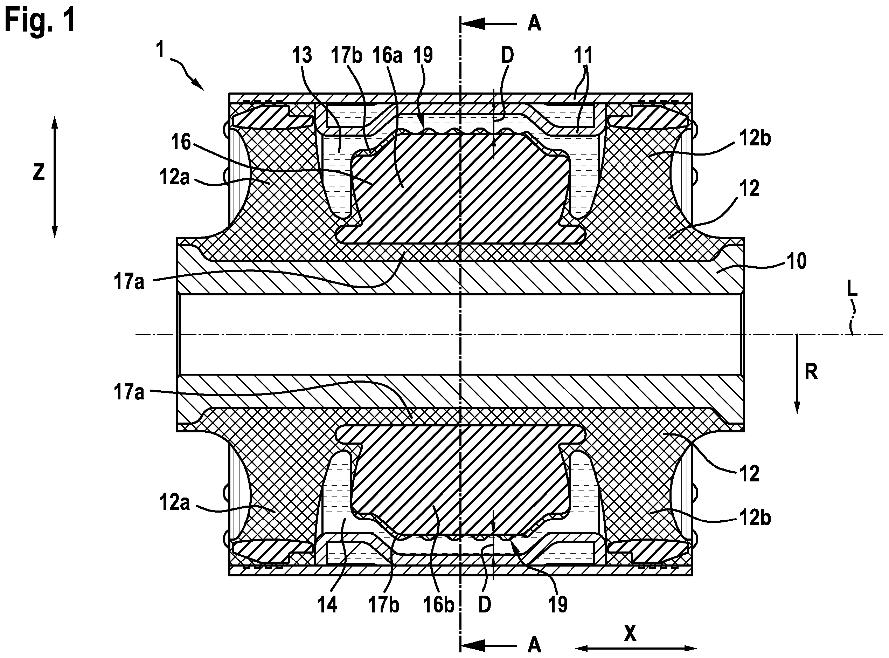

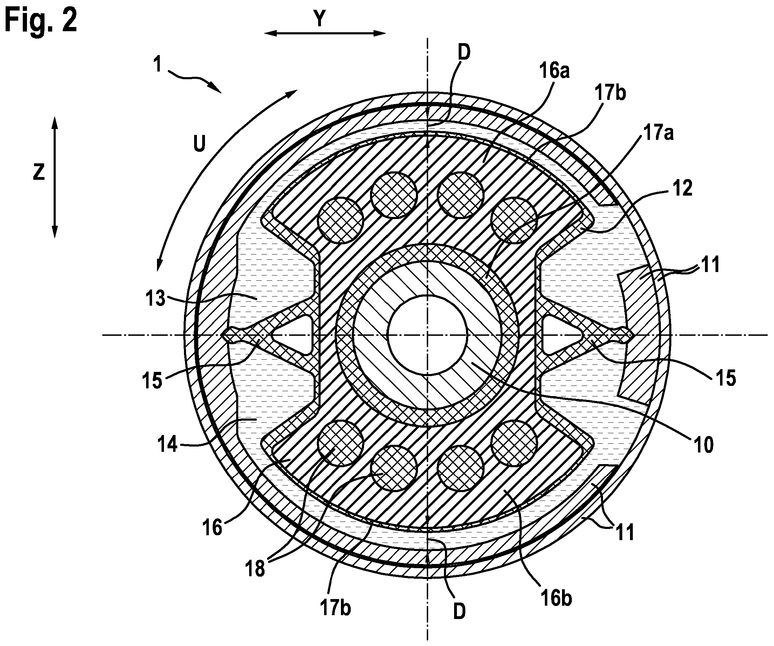

Eine erfindungsgemäße Buchse 1 ist in den Fig. 1 und 2 in den kartesischen Koordinaten einer Längsrichtung X, welche auch als axiale Richtung X bezeichnet werden kann, einer Querrichtung Y und einer vertikalen Richtung Z dargestellt. Die Querrichtung Y kann auch als Breite Y und die vertikale Richtung Z auch als Höhe Z bezeichnet werden. Die Buchse 1 weist eine Längsachse L auf, zu der eine radiale Richtung R senkrecht ausgerichtet ist. Um die Längsachse L herum verläuft eine Umfangsrichtung U.

Die Buchse 1 weist ein Innenteil 10 in Form einer Innenhülse 10 auf. Die Buchse 1 weist ferner ein Außenteil 11 in Form einer Außenhülse 11 auf. In der Höhe Z ist zwischen der Innenhülse 10 und der Außenhülse 11 eine elastomere Tragfeder 12 angeordnet, welche die Innenhülse 10 und die Außenhülse 11 in der radialen Richtung R elastisch miteinander verbindet, vgl. z.B. Fig. 1. Die elastomere Tragfeder 12 weist dabei in der Längsrichtung X eine linke Tragfederwand 12a und eine rechte Tragfederwand 12b auf.

Durch die beiden Tragfederwände 12a, 12b in Längsrichtung X sowie durch die Innenhülse 10 und die Außenhülse 11 in radialer Richtung R werden zwei fluidgefüllte Kammern 13, 14 gebildet, welche fluidführend miteinander verbunden sind (nicht dargestellt) und der fluidischen Dämpfung der Buchse 1 dienen. Dabei ist die erste obere Fluidkammer 13 in der Höhe Z oberhalb der zweiten unteren Fluidkammer 14 angeordnet, siehe z.B. Fig. 2. Die beiden Fluidkammern 13, 14 sind durch zwei horizontal verlaufende Kammerwände 15 voneinander getrennt.

Seitens der Innenhülse 10 ist innerhalb der beiden Fluidkammern 13,1 4 ein Anschlagelement 16 angeordnet, welches sich radial von der Innenhülse 10 weg erstreckt und hierdurch den Federweg D in radialer Richtung R begrenzt, indem die radial äußere Kante des Anschlagelements 16 mit der Innenseite der Außenhülse 11 in Kontakt kommen kann. Zur Reduzierung des Gewichts der Buchse 1 ist das Anschlagelement 16 aus Kunststoff gefertigt. Die Innenhülse 10 ist aus Stahl gefertigt, um höhere Belastungen aufnehmen zu können. Die Innenhülse 10 weist stirnseitig rändelartige Verzahnungen auf, um ein Verdrehen im verbauten Zustand zu verhindern (nicht dargestellt).

Das Anschlagelement 16 ist in das elastische Material der Tragfeder 12 in Längsrichtung X zwischen den beiden Tragfederwänden 12a, 12b eingebettet und vollständig von diesem umgeben. Auf diese Weise ist das Anschlagelement 16 über das elastische Material der Tragfeder 12 als elastische Verbindungsschicht 17a mit der Innenhülse 10 elastisch verbunden. Dabei ist die elastische Verbindungsschicht 17a derart in der Dicke, d.h. in radialer Richtung R, dimensioniert, dass bei einem Kontakt des Anschlagelements 16 mit der Innenseite der Außenhülse 11 mögliche Torsionsbelastungen relativ zwischen Innenhülse 10 und Außenhülse 11 durch die elastische Verbindungsschicht 17a möglichst vollständig aufgenommen werden können. Dies kann das Anschlagelement 16 von Torsionsbelastungen entlasten und hierdurch dessen Lebensdauer erhöhen. Ferner bewirkt die Verbindungsschicht 17a eine akustische Entkopplung, d.h. ein Durchdringen oder Weiterleiten eines akustischen Signals in die Fahrzeugstruktur kann hierdurch verhindert oder zumindest gemindert werden.

Das elastische Material der Tragfeder 12 umgibt das Anschlagelement 16 ferner derart, dass auch eine elastische Außenschicht 17b des Anschlagelements 16 ausgebildet wird, welche den Kontakt mit der Innenseite der Außenhülse 11 ausführt. Auch hierdurch können Torsionsbelastungen elastisch aufgenommen werden. Um dies zu verbessern, weist die elastische Außenschicht 17b des Anschlagelements 16 eine Strukturierung 19 in Form radialer Vorsprünge 19 auf, welches sich elastisch verformen und hierdurch Belastungen wirksam aufnehmen können.

Das Anschlagelement 16 weist einen ersten, in der Höhe Z oberen Anschlagbereich 16a und einen zweiten, in der Höhe Z unteren Anschlagbereich 16b auf, so dass die Buchse 1 im Wesentlichen in der Höhe Z eine Wirkung des Anschlagelements 16 aufweist. Quer hierzu, d.h. in der Querrichtung Y, findet keine Anschlagwirkung statt. In diesem Bereich sind im Wesentlichen die beiden Fluidkammern 13, 14 angeordnet.

Die beiden Anschlagbereiche 16a, 16b weisen jeweils eine Mehrzahl von Durchgängen 18 auf, die in Längsrichtung X verlaufen und von dem elastischen Material der Tragfeder 12 durchdrungen sind. Hierdurch kann eine haltbarere Verbindung zwischen dem elastischen Material der Tragfeder 12 und dem Anschlagelement 16 hergestellt werden.

Auf diese Weise kann erfindungsgemäß eine Buchse 1 mit verbesserter Lebensdauer des Anschlagelements 16 geschaffen werden. Insbesondere kann der Abrieb des Anschlagelements 16 verringert werden. Dies erfolgt einfach und kostengünstig. Gleichzeitig kann eine vergleichsweise große Anschlagsfläche geschaffen werden. Auch bietet eine derartige Buchse 1 zusätzliche Möglichkeiten zur Abstimmung der Anschlagskennlinie und eine zusätzliche kardanische Flexibilität des Anschlagelements 16.

### Bezugszeichenliste (Teil der Beschreibung)

- A: Querschnitt
- D: Federweg in radiale Richtung R
- L: Längsachse
- R: radiale Richtung
- U: Umfangsrichtung
- X: axiale Richtung; Längsrichtung
- Y: Querrichtung; Breite
- Z: vertikale Richtung; Höhe

- 1: (hydraulisch dämpfende) Buchse
- 10: Innenteil; Innenhülse
- 11: Außenteil; Außenhülse
- 12: elastomere Tragfeder
- 12a: linke Tragfederwand
- 12b: rechte Tragfederwand
- 13: erste (obere) (Fluid-)Kammer
- 14: zweite (untere) (Fluid-)Kammer
- 15: Kammerwand zwischen erster Kammer 13 und zweiter Kammer 14
- 16: Anschlagelement
- 16a: erster (oberer) Anschlagbereich des Anschlagelements 16
- 16b: zweiter (unterer) Anschlagbereich des Anschlagelements 16
- 17a: elastische Verbindungsschicht
- 17b: elastische Außenschicht
- 18: (Längs-(Durchgänge des Anschlagelements 16
- 19: Strukturierung bzw. radiale Vorsprünge des ersten Anschlagbereichs 16a bzw. des zweiten Anschlagbereichs 16b

## Patentansprüche

1. Buchse (1), vorzugsweise Hydrobuchse (1), mit
einem Innenteil (10),
einem Außenteil (11),
wenigstens einer Tragfeder (12), welche das Innenteil (10) und das Außenteil (11) radial miteinander verbindet, und
wenigstens einem Anschlagelement (16), welches
zwischen dem Innenteil (10) und dem Außenteil (11) angeordnet,
mit dem Innenteil (10) verbunden und
derart ausgebildet ist, dass das Anschlagelement (16) den radialen Federweg (D) zwischen dem Innenteil (10) und dem Außenteil (11) vorbestimmt begrenzen kann,
wobei das Anschlagelement (16) mit dem Innenteil (10) derart elastisch verbunden ist, dass das Anschlagelement (16) gegenüber dem Innenteil (10) elastisch tordiert werden kann, **dadurch gekennzeichnet, dass** das Anschlagelement (16) zumindest abschnittsweise, vorzugsweise vollflächig, eine elastische Außenschicht (17b) aufweist, welche radial in Richtung des Federweges (D) ausgerichtet ist,
und dass die elastische Außenschicht (17b) eine Strukturierung (19), vorzugsweise in Form von radialen Vorsprüngen (19), aufweist, welche ausgebildet ist, sich bei Kontakt elastisch zu verformen.

2. Buchse (1) nach Anspruch 1, **dadurch gekennzeichnet, dass**
das Anschlagelement (16) mit dem Innenteil (10) über eine elastische Verbindungsschicht (17a) zumindest abschnittsweise, vorzugsweise vollflächig, verbunden ist.

3. Buchse (1) nach einem der vorherigen Ansprüche, **dadurch gekennzeichnet, dass**
das Anschlagelement (16) im Wesentlichen in Richtung des Federweges (D) aus zwei sich diametral gegenüberliegenden Anschlagsbereichen (16a, 16b) gebildet wird.

4. Buchse (1) nach einem der vorherigen Ansprüche, **dadurch gekennzeichnet, dass** das Anschlagelement (16) im Wesentlichen senkrecht zur Richtung des Federweges (D) schmaler ausgebildet ist.

5. Buchse (1) nach einem der vorherigen Ansprüche, **dadurch gekennzeichnet, dass** das Innenteil (10) und das Anschlagelement (16) aus verschiedenen Materialien bestehen.

6. Buchse (1) nach Anspruch 5, **dadurch gekennzeichnet, dass**
wobei das Innenteil (10) aus Stahl oder aus Aluminium und das Anschlagelement (16) aus Kunststoff bestehen.

7. Buchse (1) nach einem der vorherigen Ansprüche, **dadurch gekennzeichnet, dass** das Anschlagelement (10) wenigstens einen Durchgang (18), vorzugsweise eine Mehrzahl von Durchgängen (18), aufweist, welche(r) sich vorzugsweise im Wesentlichen, besonders bevorzugt vollständig, in Längsrichtung (X) erstreckt.

8. Buchse (1) nach Anspruch 6, **dadurch gekennzeichnet, dass**
wenigstens ein Durchgang (18) in einem ersten Anschlagbereich (16a) und wenigstens ein Durchgang (18) in einem zweiten Anschlagbereich (16b) angeordnet sind.

9. Buchse (1) nach einem der vorherigen Ansprüche, **dadurch gekennzeichnet, dass** zwischen dem Innenteil (10) und dem Außenteil (11) wenigstens eine erste Kammer (13) und eine zweite Kammer (14) ausgebildet sind,
wobei die beiden Kammern (13, 14) medienführend miteinander verbunden sind.

10. Buchse (1) nach Anspruch 9, **dadurch gekennzeichnet, dass**
die beiden Kammern (13, 14) mit einem Fluid gefüllt sind.

11. Fahrwerk oder Aggregat, mit
wenigstens einer Buchse (1) nach einem der Ansprüche 1 bis 10.

12. Fahrzeug, mit
einem Fahrwerk und/oder einem Aggregat nach Anspruch 11.

## Claims

1. Bushing (1), preferably a hydraulic bushing (1), having
an inner part (10),
an outer part (11),
at least one supporting spring (12) which connects the inner part (10) and the outer part (11) radially to one another, and
at least one stop element (16) which
is arranged between the inner part (10) and the outer part (11),
is connected to the inner part (10), and
is embodied in such a way that the stop element (16) can limit the radial spring travel (D) between the inner part (10) and the outer part (11) in a predetermined fashion,
wherein the stop element (16) is elastically connected to the inner part (10) in such a way that the stop element (16) can be elastically twisted relative to the inner part (10), **characterized in that**
the stop element (16) has, at least in certain sections, and preferably over the entire surface, an elastic outer layer (17b) which is oriented radially in the direction of the spring travel (D),
and **in that** the elastic outer layer (17b) has structuring (19), which is preferably in the form of radial projections (19) and is designed to deform elastically on contact.

2. Bushing (1) according to Claim 1, **characterized in that**
the stop element (16) is connected to the inner part (10) via an elastic connecting layer (17a), at least in certain sections, and preferably over an entire surface.

3. Bushing (1) according to either of the preceding claims, **characterized in that**
the stop element (16) is formed substantially in the direction of the spring travel (D), from two stop regions (16a, 16b) which lie diametrically opposite one another.

4. Bushing (1) according to one of the preceding claims, **characterized in that** the stop element (16) is made narrower substantially perpendicularly with respect to the direction of the spring travel (D).

5. Bushing (1) according to one of the preceding claims, **characterized in that** the inner part (10) and the stop element (16) are composed of different materials.

6. Bushing (1) according to Claim 5, **characterized in that** the inner part (10) is composed of steel or of aluminium and the stop element (16) is composed of plastic.

7. Bushing (1) according to one of the preceding claims, **characterized in that** the stop element (10) has at least one passage (18), preferably a multiplicity of passages (18), which extends/extend preferably substantially, and particularly preferably entirely, in the longitudinal direction (X).

8. Bushing (1) according to Claim 6, **characterized in that** at least one passage (18) is arranged in a first stop region (16a), and at least one passage (18) is arranged in a second stop region (16b).

9. Bushing (1) according to one of the preceding claims, **characterized in that** at least one first chamber (13) and one second chamber (14) are embodied between the inner part (10) and the outer part (11),
wherein the two chambers (13, 14) are connected to one another in a media-conducting fashion.

10. Bushing (1) according to Claim 9, **characterized in that**
the two chambers (13, 14) are filled with a fluid.

11. Chassis or assembly having
at least one bushing (1) according to one of Claims 1 to 10.

12. Vehicle having
a chassis and/or an assembly according to Claim 11.

## Revendications

1. Douille (1), de préférence douille hydraulique (1), avec
une partie intérieure (10),
une partie extérieure (11),
au moins un ressort de suspension (12) qui relie radialement la partie intérieure (10) et la partie extérieure (11), et
au moins un élément de butée (16), qui est
agencé entre la partie intérieure (10) et la partie extérieure (11),
relié à la partie intérieure (10) et
est réalisé de telle sorte que l'élément de butée (16) peut limiter de manière prédéterminée la course de ressort radiale (D) entre la partie intérieure (10) et la partie extérieure (11),
l'élément de butée (16) étant relié de manière élastique à la partie intérieure (10) de telle sorte que l'élément de butée (16) peut être tordu de manière élastique par rapport à la partie intérieure (10), **caractérisée en ce que**
l'élément de butée (16) présente au moins par sections, de préférence sur toute sa surface, une couche extérieure élastique (17b) qui est orientée radialement dans la direction de la course de ressort (D),
et **en ce que** la couche extérieure élastique (17b) présente une structuration (19), de préférence sous la forme de saillies radiales (19), qui est réalisée pour se déformer élastiquement lors du contact.

2. Douille (1) selon la revendication 1, **caractérisée en ce que**
l'élément de butée (16) est relié à la partie intérieure (10) par l'intermédiaire d'une couche de liaison élastique (17a) au moins par sections, de préférence sur toute la surface.

3. Douille (1) selon l'une quelconque des revendications précédentes, **caractérisée en ce que**
l'élément de butée (16) est formé, essentiellement dans la direction de la course de ressort (D), de deux zones de butée (16a, 16b) diamétralement opposées.

4. Douille (1) selon l'une quelconque des revendications précédentes, **caractérisée en ce que**
l'élément de butée (16) est réalisé sous forme plus étroite essentiellement perpendiculairement à la direction de la course de ressort (D).

5. Douille (1) selon l'une quelconque des revendications précédentes, **caractérisée en ce que**
la partie intérieure (10) et l'élément de butée (16) sont constitués de matériaux différents.

6. Douille (1) selon la revendication 5, **caractérisée en ce que** la partie intérieure (10) est en acier ou en aluminium et l'élément de butée (16) est en matière plastique.

7. Douille (1) selon l'une quelconque des revendications précédentes, **caractérisée en ce que**
l'élément de butée (10) présente au moins un passage (18), de préférence une pluralité de passages (18), qui s'étend de préférence essentiellement, de manière particulièrement préférée complètement, dans la direction longitudinale (X).

8. Douille (1) selon la revendication 6, **caractérisée en ce que** au moins un passage (18) est agencé dans une première zone de butée (16a) et au moins un passage (18) est agencé dans une deuxième zone de butée (16b).

9. Douille (1) selon l'une quelconque des revendications précédentes, **caractérisée en ce que**
au moins une première chambre (13) et une deuxième chambre (14) sont réalisées entre la partie intérieure (10) et la partie extérieure (11),
les deux chambres (13, 14) étant reliées l'une à l'autre de manière à guider un fluide.

10. Douille (1) selon la revendication 9, **caractérisée en ce que** les deux chambres (13, 14) sont remplies d'un fluide.

11. Châssis ou groupe, avec
au moins une douille (1) selon l'une quelconque des revendications 1 à 10.

12. Véhicule, avec
un châssis et/ou un groupe selon la revendication 11.
